# EUROPÄISCHE PATENTSCHRIFT

(11) **EP 0 556 824 B1**
(45) Veröffentlichungstag und Bekanntmachung des Hinweises auf die Patenterteilung: **03.01.1996**
(21) Anmeldenummer: 93102556.3
(22) Anmeldetag: 18.02.1993
(51) Int. Cl.: F16L 58/10, E03F 3/06, B29C 65/00, B65D 90/04

(54) **Verfahren zum Anbringen einer Schutzfolie an einer Wand sowie dafür vorgesehenes Schutzfolien- und Ankersystem**
Method for providing a wall of a protective sheet; system provided with a protective sheet and anchoring means
Procédé pour l'application sur une paroi d'une feuille de protection; système muni d'une feuille de protection et de moyens d'ancrage

(30) Priorität: 19.02.1992 DE 4205033
(43) Veröffentlichungstag der Anmeldung: 25.08.1993
(73) Patentinhaber: Mansfeld, Lothar, D-21255 Tostedt (DE)
(72) Erfinder: Mansfeld, Lothar, D-21255 Tostedt (DE)
(74) Vertreter: Glawe, Delfs, Moll & Partner

(56) Entgegenhaltungen:
- EP-A- 0 069 303
- CH-A- 455 649
- DE-A- 3 815 843
- DE-U- 8 505 653
- DE-U- 9 012 003
- GB-A- 2 094 860

## Beschreibung

Es ist bekannt, eine Wand zum Schutz vor Korrosion oder Mediumsdurchtritt mit einer Schutzfolie zu bekleiden, die mittels Ankern gehalten wird, die eingebettet sind in eine Mörtelschicht. Diese Mörtelschicht kann selbst die Wand bilden oder an der Wand angebracht sein. Die Anker sind bei bekannten Schutzfolien einstückig mit diesen verbunden (DE-A 32 35 185). Dies hat den Nachteil, daß die Mörtelschicht hinter der Schutzfolie gebildet wird und daher zur Inspektion nicht mehr zugänglich ist. Dies ist aber beispielsweise bei Kanalauskleidung von entscheidender Bedeutung, da die in dem schwer zugänglichen Raum zwischen Folie bzw. Schalung einerseits und der vorhandenen Kanalwandoberfläche andererseits zu bildende Mörtelschicht leicht Schäden aufweisen kann, die die Standfestigkeit der Auskleidung gefährden. In manchen Fällen haben die Behörden daher verlangt, daß zunächst lediglich die Mörtelschicht ohne Verkleidung innerhalb des zu sanierenden Kanals gebildet wird, damit ihr einwandfreier Zustand kontrolliert werden kann, und erst anschließend die Folie aufgebracht wird. Dies zwingt zu problematischer Bolzenbefestigung.

Die Erfindung vermeidet diese Nachteile durch die Merkmale der Ansprüche.

Gleichzeitig mit der Bildung der Mörtelschicht werden darin die Anker eingebettet. Erst anschließend wird die Schutzfolie mit den Ankern verbunden. Dies setzt voraus, daß die Position der Anker hinreichend genau vorbestimmt ist, beispielsweise um ein Gerät für die Verschweißung der Ankerköpfe mit der Rückseite der Folie richtig ansetzen zu können. Dies wird dadurch ermöglicht, daß die Anker eine regelmäßige Anordnung zueinander aufweisen. Diese wird dadurch gesichert, daß die Anker während des Einbettens durch die Abstandshalter in der gewünschten Position gehalten werden. Besonders vorteilhaft ist es, in der Folie zu den Ankern passende Verbindungsmittel vorzusehen, die in derselben regelmäßigen Anordnung in der Schutzfolie vorgesehen sind.

Ein aus Schutzfolie und Ankern bestehendes System zum Bekleiden einer Wand zeichnet sich daher dadurch aus, daß die Schutzfolie regelmäßig verteilte Verbindungsmittel aufweist und die Anker mit Abstandshaltern zur Sicherung derselben Verteilungsanordnung relativ zueinander versehen sind. Die Abstandshalter bilden zweckmäßigerweise ein die Anker enthaltendes Flächengebilde, wobei dies so anzuordnen ist, daß seine Flächenerstreckung etwa parallel zu der zu bekleidenden Wand bzw. der anzubringenden Folie ist. Auf die Art der an der Folie vorgesehenen Verbindungsmittel kommt es in diesem Zusammenhang nicht an. Jedoch bestehen diese zweckmäßigerweise aus Öffnungen, an oder in denen die Köpfe der Anker mit der Folie verschweißt werden können.

In einer ersten Ausführungsform der Erfindung wird das Flächengebilde von einer Schalung oder einem der Schalung zugehörigen Teil gebildet. Beispielsweise kann eine Schalungsplatte eine Vielzahl von Löchern aufweisen, in die die Köpfe der Anker eingesteckt werden, so daß die in der Mörtelschicht einzubettenden Ankerteile nach hinten von der Schalungsplatte abstehen. Nimmt man nach dem Erhärten der Mörtelschicht die Schalung ab, so verbleiben die Anker in der Mörtelschicht, aus der ihre Köpfe hervorstehen, um mit der Folie verbunden werden zu können.

Die Ankerköpfe müssen so gestaltet sein, daß sie das Abnehmen der Schalung nicht behindern. Wenn die Schalung eben ist und quer zu ihrer Flächenerstreckung abgenommen werden kann, verlaufen die Köpfe zweckmäßigerweise quer zur Plattenebene. Wenn die Schalung gekrümmt ist, wie dies beispielsweise bei einer Kanalauskleidung anzunehmen ist, sollen die Schalungsköpfe verhältnismäßig kurz und beispielsweise konisch gestaltet sein, um die Abnahme der Schalungsplatte nicht zu behindern. Stattdessen ist es auch möglich, die zur Positionierung der Ankerköpfe vorgesehenen Öffnungen nicht in der großflächigen, starren Schalungsplatte vorzusehen, sondern in einem besonderen, der Schalung zugehörigen Teil. Dabei kann es sich beispielsweise um eine flexible Matte handeln, die der Schalung aufgelegt wird oder um eine Vielzahl von Platteneinheiten, die sich zur gesamten Schalungsfläche ergänzen und bspw. ein zum Ankerraster passendes Einzelmaß aufweisen. Diese Matte oder Platte kann auch noch anderen Zwecken dienen, bspw. als Filtermatte zum Vakuumieren des Mörtels ausgestaltet sein.

Während bei der soeben ausgeführten Ausführungsform die Anker im allgemeinen einzeln vorgefertigt werden und an Ort und Stelle in die dafür vorgesehenen Aufnahmen der Schalung eingesetzt werden, wird in einer anderen, bevorzugten Ausführungsform der Erfindung das Flächengebilde, das die Abstandshalterfunktion leistet, fest mit den Ankern verbunden. Das Flächengebilde kann mattenartig oder bahnartig groß ausgebildet sein und jeweils eine Vielzahl von Ankern enthalten. Stattdessen ist es auch möglich, das Flächengebilde aus einer Mehrzahl kleinerer Einheiten zusammenzusetzen, die jeweils einen oder eine geringe Anzahl von Ankern umfassen und derart miteinander verbunden werden können, daß die gewünschte Positionierung erreicht wird. Zu diesem Zweck können sie am Rand mit geeigneten Verbindungsmitteln versehen sein.

Das Flächengebilde soll durchbrochen ausgeführt sein, insbesondere gitter- oder netzartig. Wenn das Flächengebilde an der Vorderseite der Mörtelschicht liegt, gestattet dies Merkmal die Inspektion der Mörtelschicht vor der Befestigung der Schutzfolie. Auch besteht die Möglichkeit, die Mörtelschicht gewünschtenfalls ohne Schalung von derjenigen Seite her, auf der später die Schutzfolie liegt, einzubringen, beispielsweise im Spritzverfahren. Dies gilt auch dann, wenn das Flächengebilde (beispielsweise als Bewehrung) in der Mörtelschicht liegt. Schließlich besteht auch die Möglichkeit, das Flächengebilde hinter der Mörtelschicht anzuordnen, also auf derjenigen Seite der Mörtelschicht, die der Schutzfolie abgewandt ist. In diesem Fall braucht das Flächengebilde nicht durchbrochen ausgeführt zu sein.

Dank der Verbindung der Anker durch das Flächengebilde ist es leicht möglich, die Anker auch ohne Schalung anzubringen, indem beispielsweise das Flächengebilde an derjenigen Wand, vor der die Mörtelschicht unter Einbettung der Anker geschaffen werden soll, angeheftet wird. Es kann dann die Mörtelschicht auf beliebige auch schalungsfreie Weise, beispielsweise durch Spritzen, geschaffen werden, wobei das Flächengebilde dank seinen Durchbrechungen kein Hindernis bildet. Der Gedanke, an den Ankern Abstandshalter in Gestalt eines durchbrochenen Flächengebildes vorzusehen, verdient daher Schutz unabhängig von der übereinstimmenden Lokalisierung der Anker und der möglicherweise an der Schutzfolie vorgesehenen Verbindungseinrichtungen (Anspruch 20).

Wenn solche Verbindungseinrichtungen an der Folie in Form von Öffnungen vorgesehen sind, in deren Bereich die Folie mit den Köpfen der Anker verbunden, insbesondere verschweißt, werden kann, werden die Öffnungen im Falle einer Kanalauskleidung oder ähnlich gekrümmte Anordnungen zweckmäßigerweise in derjenigen Richtung, die der späteren Umfangsrichtung entspricht, länglich ausgeführt, um ein Zusammenwirken mit den Ankerköpfen auch dann zu ermöglichen, wenn aufgrund des ein wenig unterschiedlichen Krümmungsradius des die Ankerflächen verbindenden Flächengebildes einerseits und der Schutzfolie andererseits ein gewisser Versatz in Umfangsrichtung auftritt. Stattdessen kann auch vorgesehen sein, daß die Abstandshalter der Anker für den Einsatz in gekrümmten Baukörpern (Tunnel-, Kanalauskleidungen) in einer Achse dehnbar sind, z. B. durch streckfähige oder dehnbare Ausbildung der Stege als gewellte, zickzackartige oder rhombische Verbindungen. Die Ankerelemente können dadurch - trotz unterschiedlicher, wechselnder Biegeradien zwischen Ankerkopf und Abstandsgitter - auf der Schalung oder Hilfsaufnehmung exakt im vorgesehenen Abstand positioniert werden.

Zweckmäßigerweise stehen die Köpfe der Anker über die der Schutzfolie zugewandte Oberfläche der Mörtelschicht hinaus vor. Sie können dann die Verbindungsöffnungen der Schutzfolie durchragen und leichter damit verbunden, insbesondere verschweißt werden. Ferner besteht die Möglichkeit, zwischen der Mörtelschicht und der Schutzfolie einen Abstand vorzusehen, der insbesondere zur Bildung eines Fließquerschnitts dient, um etwa von außen durch die Mörtelschicht eindringendes Wasser abziehen zu können und die Schutzfolie sowie deren Befestigungseinrichtungen von einem von außen her zudringenden Druck zu entlasten. Auch kann der Überstand der Köpfe über die Oberfläche der Mörtelschicht genutzt werden, um in diesem Bereich eine die Oberfläche der Mörtelschicht bestimmende und die Ankerköpfe aufnehmende Hilfsschalungsplatte vorzusehen, beispielsweise eine Kunststoffschaumplatte. Diese kann auch im Sinne der Erfindung den Abstandshalter bzw. das Flächengebilde zwischen den Ankern bilden, wobei ggf. auf eine weitere Verbindung zwischen den Ankern verzichtet werden kann, obgleich diese in der Regel zweckmäßig ist. Diese Hilfsschalungsplatte kann auch von einer Fasermatte oder dergleichen gebildet sein, die das Vakuumieren der dahinter gebildeten Mörtelschicht erlaubt. Auch diese kann im Sinne der Erfindung Abstandhalter bzw. Flächengebilde zwischen den Ankern sein. Ein großflächiger Zusammenhang in Form einer Matte oder einer Bahn ist zweckmäßig aber nicht erforderlich. Vielmehr kann die Gesamtfläche zusammengesetzt sein aus mehreren Einzelstücken.

Damit ein zwischen der Oberfläche der Mörtelschicht und der Schutzfolie gewünschter Fließquerschnitt nicht durch Anlage der Folie an der Mörtelschicht verschlossen wird, kann das die Anker verbindende Flächengebilde, das im Bereich der Oberfläche der Mörtelschicht liegt, mit geeigneten Vorsprüngen (Noppen) ausgerüstet sein, die über die Oberfläche der Mörtelschichten nach vorne hinausragen. Damit sie bei der Bildung der Mörtelschicht nicht von Mörtel eingeschlossen werden, werden sie in Ausnehmungen der Schalung bzw. Hilfsschalung aufgenommen. Stattdessen ist es auch möglich, die der Schutzfolie zugewandte Seite des Flächengebildes, das ansonsten weitgehend in die Oberseite der Mörtelschicht eingebettet sein kann, derart mit Riefelung, Zahnung oder Kanälen auszurüsten, die von Mörtel frei bleiben, daß dadurch der gewünschte Fließquerschnitt gesichert wird.

Wenn im Zusammenhang mit der Erfindung von einer Folie oder Schutzfolie gesprochen wird, so soll dies außer flexiblem Flächenmaterial auch plattenartiges einschließen. Auf den Folienwerkstoff kommt es nicht an, jedoch handelt es sich zweckmäßigerweise um Kunststoffolien. Auch auf die Art und das Material der Anker kommt es im Prinzip nicht an. Vorteilhaft ist jedoch die Verwendung von Ankern, deren Köpfe mit der Folie verschweißt werden können. Die Abstandshalter bzw. Flächengebilde bestehen zweckmäßigerweise ebenfalls aus Kunststoff. Die Abstandshalter können auch aus Metallgittern oder -geweben gebildet werden, mit denen die Anker verbunden sind, insbesondere wenn diese als Bewehrung der Mörtel-/Betonschicht herangezogen werden.

Die Begriffe "vorne" und "hinten" sind darauf bezogen, daß die Schutzfolie "vor" einer "dahinter" befindlichen Wand angebracht wird.

Die Erfindung wird im folgenden näher unter Bezugnahme auf die Zeichnung erläutert, die vorteilhafte Ausführungsbeispiele veranschaulicht. Darin zeigen:
Fig. 1 einen Querschnitt durch eine erfindungsgemäß gestaltete, mit einer Schutzfolie bekleidete Wand,
Fig. 2 einen Ausschnitt aus der dafür verwendeten Schutzfolie,
Fig. 3 einen Ausschnitt aus dem dazu verwendeten, die Anker enthaltenden Flächengebilde,
Fig. 4 die Schalungsanordnung für die Wandausführung nach Fig. 1,
Fig. 5 und 6 eine abgewandelte Form eines sich aus mehreren Teilen zusammensetzenden Flächengebildes,
Fig. 7 die Verwendung einer Schalung als Abstandshalter für die Anker,
Fig. 8 die Verwendung einer Vakuumiermatte als Abstandshalter für die Anker,
Fig. 9 zusammengesetzte Schalungshilfsplatten als Flächengebilde,
Fig. 10 die Befestigung eines durchbrochenen Flächengebildes an einer zu bekleidenden Wand,
Fig. 11 und 12 die Verwendung einer Bewehrungsmatte als Abstandshalter für die Anker im Schalungszustand bzw. nach Herstellung der Mörtelschicht,
Fig. 13 eine in einer Richtung nachgiebige Matte und Fig. 14 bis 16 verstärkte Verbindungsmittel an der Folie.

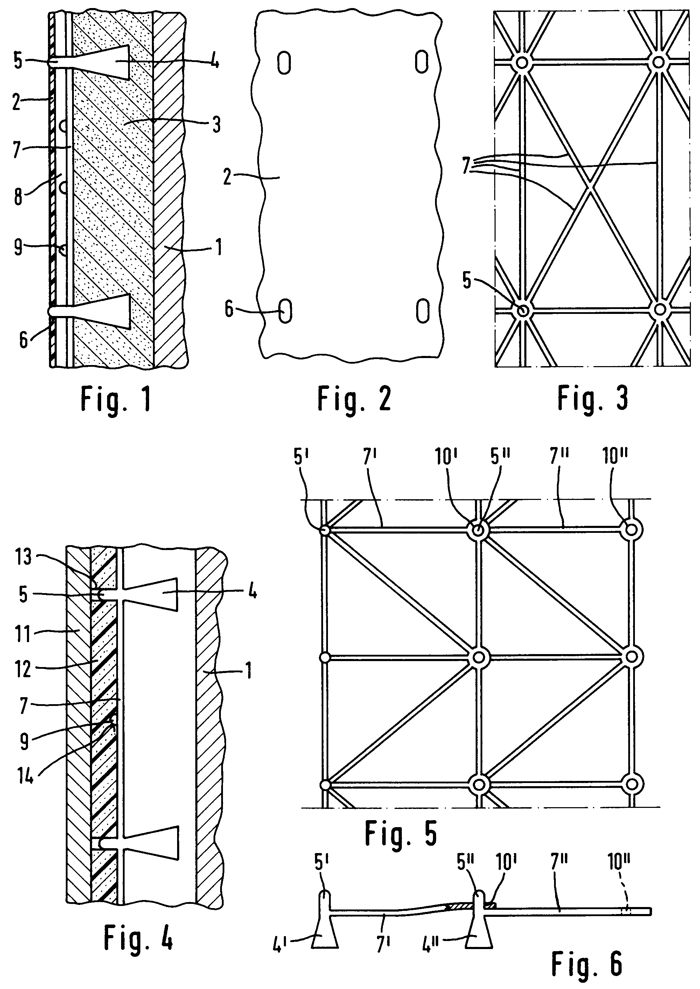

Gemäß Fig. 1 ist eine Wand 1, bspw. die Innenwand eines Abwasserkanals, mit einer Schutzfolie 2 bekleidet. Eine Mörtelschicht 3, die eigenstabil ist oder an der Wand 1 haftet, enthält Anker 4 aus einem mit der Folie 2 verschweißbaren Werkstoff. Die Köpfe 5 der Anker ragen durch Öffnungen 6 in der Folie und sind mit dieser dicht verschweißt.

Der Begriff Mörtelschicht soll keinerlei Beschränkung von Art oder Konsistenz der Schicht 3 beinhalten mit Ausnahme des Merkmals, daß es sich um einen aus dem fließfähigen oder plastischen Zustand erhärtenden Stoff handelt. Die Mörtelschicht 3 kann selbsttragend ausgebildet sein und zu diesem Zweck auch Bewehrungen enthalten. Jedoch kann auch vorgesehen sein, daß sie ihre Stabilität durch Haftung an der Oberfläche der Wand 1 empfängt.

Die Öffnungen 6 sind in der vorgefertigten Folie 2 regelmäßig verteilt. Dies macht erforderlich, daß die Ankerköpfe 5 sich hinreichend genau an vorbestimmbarer Stelle befinden müssen. Dies wird dadurch gewährleistet, daß die Anker 4 durch Abstandshalter 7 verbunden sind, die einander zu einem Netz oder Gitter gemäß Fig. 3 ergänzen, in welchem die Anker 4 einstückig fest oder nachträglich einsetzbar bzw. auswechselbar eingesetzt sind. Die Anker werden dadurch Teil eines Flächengebildes, das vor Bildung der Mörtelschicht 3 in geeigneter Weise fixiert werden kann, wobei die gegenseitigen Abstände der Ankerköpfe 5 in Übereinstimmung mit den Folienöffnungen 6 gewährleistet sind.

Zwischen der Schutzfolie 2 und der Oberfläche der Mörtelschicht 3 befindet sich ein Zwischenraum 8, der zur Ableitung eines Überdrucks dient, der von der Wandseite her eindringen mag. Bspw. muß man bei Abwasserkanälen damit rechnen, daß unter Druck anstehendes Wasser durch die Wand 1 und die Mörtelschicht 3 auf die Folienrückseite gelangt. Wird dieser Druck bzw. das Wasser nicht abgeleitet, könnte die Schutzfolie von der Wand abgesprengt werden oder jedenfalls so weit nach innen verformt werden, daß die Kanalfunktion dadurch beeinträchtigt wird.

Der Abstand 8 zwischen der Folienrückseite und der Vorderseite der Mörtelschicht 3 wird durch Noppen 9 aufrechterhalten, die an dem Flächengebilde 7 angeordnet sind. Unbedingt erforderlich sind solche Noppen nicht, da man es in der Regel zulassen kann, daß die Folie 2 an der Oberfläche der Mörtelschicht 3 anliegt, da im Falle eines Auftretens eines folienrückseitigen Überdrucks dieser ohnehin dafür sorgt, daß die Folie von der Mörtelschicht unter Bildung eines Abflußquerschnitts abgehoben wird.

Das in Fig. 3 dargestellte, die Anker enthaltende Flächengebilde 7 kann man ebenso wie die Folie 2 in Bahnen von unendlicher Länge herstellen. Für den konkreten Anwendungsfall kann es ebenso wie die Bahnen in unmittelbar einsetzbaren Stücken vorkonfektioniert werden.

Statt einer quasi unendlichen Fertigung des Flächengebildes 7 besteht auch die Möglichkeit, es aus Einzelstücken zusammenzusetzen. Ein solches Ausführungsbeispiel zeigen Fig. 5 und 6. Je eine Reihe von Ankern 4' ist mit einem Streifen von Abstandshaltern 7' verbunden, der an seinem den Ankern 4' entgegengesetzten Rand Öffnungen 10' zur Verbindung mit den Ankern 4'' eines zweiten Abstandshalterstreifens, bestehend aus den Abstandshaltern 7'' aufweist. Die Streifen lassen sich dann zu einem Flächengebilde beliebiger Ausdehnung so zusammenstecken, wie dies in Fig. 6 im Querschnitt angedeutet ist.

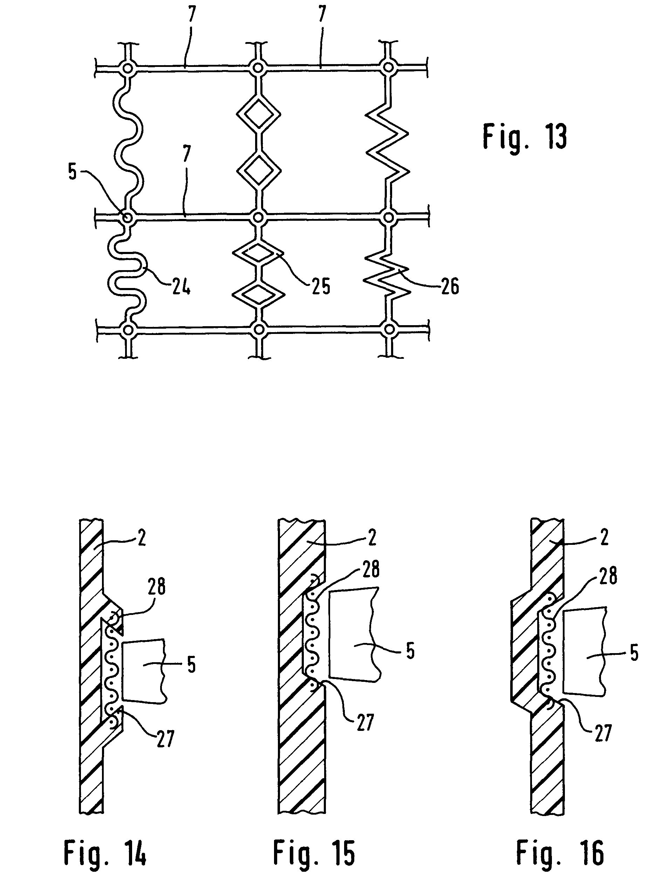

Die Abstandshalter gemäß Fig. 3 und 5 sind gitter- oder netzartig durchbrochen gezeigt. Dies hat den Vorteil, daß nach Fertigstellung der Mörtelschicht 3 diese von der Seite der noch nicht angebrachten Folie her inspiziert und nötigenfalls ausgebessert werden kann. Im Ausführungsfall von kreisförmigen Bauwerksquerschnitten werden vorzugsweise gitterförmige Abstandshalter nach Figur 13 eingesetzt, die auf der in Krümmungslinie verlaufenden Achse streck- bzw. dehnbare Abstandsstege 24 - 26 aufweisen, die sich durch die Biegespannung in ihrer Länge dem Biegeradius anpassen.

Fig. 4 veranschaulicht die Schalungsanordnung bei der Herstellung der Anordnung gemäß Fig. 1. Vor der Wand 1 ist die Schalungsplatte 11 gehalten. An deren der Wand 1 zugewandten Seite ist das Flächengebilde 7 mit den Ankern 4 gehalten. Der Zwischenraum kann dann mit fließfähigem Mörtel ausgefüllt werden. Damit dabei die Ankerköpfe 5 frei bleiben, ist zwischen dem Flächengebilde 7 und der Schalungsplatte 11 eine Kunststoffschaumschicht 12 angeordnet, die Ausnehmungen 13 zur Aufnahme der Ankerköpfe 5 hat sowie ggfs. auch Ausnehmungen 14 zur Aufnahme der Noppen 9. Statt der Noppen am Abstandshalter 7 können auch Noppen auf der Vorderfläche der Mörtelschicht 3 gebildet werden, indem entsprechende zur Mörtelschicht hin offen bleibende Ausnehmungen in der Kunststoffschaumschicht 12 vorgesehen werden. Die Kunststoffschaumschicht 12 kann aus einzelnen Platten zusammengesetzt sein. Sie kann zum Lieferumfang des Flächengebildes 7 und der Anker gehören und bspw. bei der Vorkonfektionierung mit diesen verbunden werden. Sie kann aus biegsamen Material bestehen, damit man die Anordnung der Krümmung der Wand 1, falls eine solche wie bspw. im Kanalbau vorhanden ist, anpassen kann. Es kann sich dabei auch um eine Filtermatte zum Vakuumieren des Mörtels handeln.

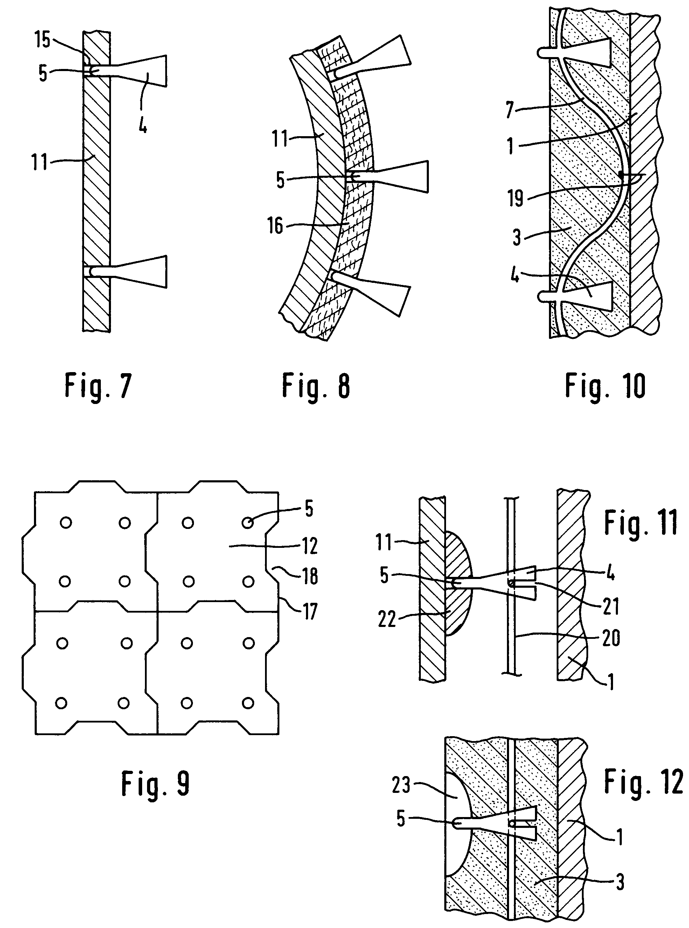

Wenn die Schaumstoffschicht 12 von einer Mehrzahl von Platten gebildet ist, wie dies in Fig. 9 angedeutet ist, haben diese Platten zweckmäßigerweise einen Randverlauf, der ihre genaue gegenseitige Positionierung gestattet, indem Vorsprünge 17 am Rand der einen Platte jeweils in einer Ausnehmung 18 am Rand der anderen Platte eingreifen.

Die Schicht 12 kann die Abstandshalterfunktion für die Anker 4 auch vollständig übernehmen. Die Abstandshalter 7 und das von diesen gebildete Flächengebilde entfallen dann und werden ersetzt durch das von den Platten 12 dargestellte Flächengebilde, in dessen Ausnehmungen 13 die Ankerköpfe 5 eingesteckt werden, so daß sie darin hinreichend sicher gehalten sind.

Bei einer anderen Ausführungsform der Erfindung wird die Abstandshalterfunktion von der Schalung übernommen. Wie in Fig. 7 dargestellt, enthält die Schalungsplatte 11 eine Vielzahl von Öffnungen 15, deren Form und Größe derjenigen der Ankerköpfe 5 angepaßt sind, so daß diese hinreichend fest dort eingesetzt werden können.

Bei einer Variante dieser Ausführungsform werden die Anker 4 nicht von der eigentlichen Schalungsplatte, sondern von einer Matte oder Platte 16 gehalten, die auf die Schalungsplatte 11 aufgelegt ist (Fig. 8). Bei dieser Matte 16 kann es sich bspw. um eine zum Vakuumieren der Mörtelschicht 3 vorgesehenen Filtermatte handeln. Die Ausführung gemäß Fig. 8 hat gegenüber derjenigen gemäß Fig. 7 den Vorteil, daß die Schalung und die flexible Matte 16 auch dann problemlos von den aus der erhärteten Mörtelschicht herausragenden Ankerköpfen 5 abgenommen werden können, wenn die Anordnung gekrümmt ist.

In den bisher erörterten Ausführungen ist vorgesehen, daß die Anker mit dem sie ggfs. verbindenden Flächengebilde von der Schalung gehalten werden. Jedoch bietet das Flächengebilde 7 auch die bequeme Möglichkeit der Befestigung am Untergrund, wie dies in Fig. 10 mittels eines Nagels 19 gezeigt ist. Die Mörtelschicht 3 kann dann schalungsfrei aufgetragen werden, bspw. durch ein Spritzverfahren. Die durchbrochene Ausführung des Flächengebildes 7 behindert dabei die Bildung der Mörtelschicht 3 nicht.

Schließlich zeigen Fig. 11 und 12 die Möglichkeit, das Flächengebilde als Bewehrung für die Mörtelschicht 3 heranzuziehen in dem beispielsweise eine Bewehrungsmatte 20 als Abstandshalter für die Anker 4 vorgesehen wird, die mit einer geeigneten Einrichtung zur Verbindung mit der Bewehrungsmatte ausgerüstet sind. Dabei kann es sich bspw. um einen Kreuzschlitz 21 handeln, der es erlaubt, die Abstandshalter auf die Kreuzungspunkte der Bewehrungsmatte 20 aufzuklemmen.

Wenn die Bewehrungsmatte am Untergrund befestigt ist, kann die Mörtelschicht wiederum schalungsfrei gebildet werden. Dabei kann die Dicke der Schicht so gesteuert werden, daß die Ankerköpfe frei bleiben. Wird hingegen eine ringförmige Spritzschablone eingestellt, nach der das Raumprofil kontrolliert aufgemörtelt wird, können daran auch Platzhalterteller 22 befestigt werden, die die Ankerköpfe 5 in Position halten und vor Verunreinigung mit Mörtel schützen. Wenn eine Schalung 11 verwendet wird, so ist es ebenfalls zweckmäßig, die Ankerköpfe 5 mit einem Platzhalterteller 22 auszurüsten. Nach der Erhärtung des Mörtel wird die Schablone bzw. die Schalung entfernt und der Platzhalterteller kann abgenommen werden (Fig. 11, 12). Im Bereich des Ankerkopfes ist eine Mulde 23 in der Mörtelschicht ausgebildet, die das Befestigen der Folie am Ankerkopf 5 erleichtert. Stattdessen kann selbstverständlich auch wieder eine Schicht 12 (Fig. 4) oder 16 (Fig. 8) dazu benutzt werden, die Köpfe mörtelfrei zu halten.

Während oben im Beispiel vorausgesetzt wurde, daß die Verbindung der Ankerköpfe 5 mit der Folie dadurch bewerkstelligt wird, daß die Ankerköpfe in oder durch Öffnungen 6 in der Folie ragen, wird in dem Ausführungsbeispiel der Fig. 14 - 16 angenommen, daß die geschlossen ausgebildete Folie mit den Ankerköpfen durch Hintergrundschweißung verbunden wird.

Die gemäß Figur 14 - 16 rückwärtig an der Folie 2 vertieft angeordneten Verankerungspunkte 27 sind auf der Folienoberseite zusätzlich markiert (Gravur) oder treten erhaben als Aufwerfung (Fig. 16) hervor. Durch Hitze und Anpreßdruck wird die nicht gelochte Folie mit den Ankern verschweißt. Die rück bzw. vorderseitigen Profilierungen der Folie im Bereich der Verbindungsstellen/Schweißstellen können zusätzlich die Einlage einer gitter- bzw. gewebeartigen Verstärkung 28 erhalten, die sich im Schweißvorgang in das erweichte Material von Ankerkopf 5 und Folie 2 einbettet. Wenn die Verstärkungen aus Metall sind, können sie zur Wärmeproduktion an Ort und Stelle beispielsweise durch Induktion herangezogen werden.

Wenn die durch Platzhalterteller 22 im Kopfbereich 5 der Anker gebildeten Mulden 23 im Mörtel gemäß Fig. 11, 12 verbleiben und die Folie im entsprechenden Größenverhältnis rückwärtige Verstärkungen als Verbindungsstellen gemäß Fig. 14 bis 16 aufweist, kann die Verbindung von Ankerkopf und Folie durch Hintergrundschweißung erfolgen. In der Folie brauchen dann keine Löcher für die Verschweißung vorgesehen werden.

Ein wesentlicher Vorteil der Erfindung besteht auch darin, daß sie gute Voraussetzungen für spätere Ausbesserung hat. Sollte die Schutzfolie schadhaft sein, so läßt sich der zu ersetzende Teil leicht mittels eines Kreisschnitts (Zentrumsbohrer) von den Ankern trennen, die danach wieder zur Befestigung eines neuen Folienstücks verwendet werden können.

## Patentansprüche

1. Verfahren zum Anbringen einer Schutzfolie an einer Wand, bei dem eine Mörtelschicht gebildet und mit darin eingebetteten Ankern erhärten gelassen wird, wobei die Anker während des Einbettens von Abstandshaltern in vorbestimmten Positionen relativ zueinander gehalten werden und danach die Schutzfolie mit den Ankern verbunden wird.

2. Verfahren nach Anspruch 1, dadurch gekennzeichnet, daß die vorbestimmten Relativpositionen der Anker den relativen Positionen von in der Schutzfolie vorgesehenen Verbindungsmitteln gleichen.

3. Schutzfolien- und Ankersystem zum Bekleiden einer Wand mittels des Verfahrens nach Anspruch 1, dadurch gekennzeichnet, daß die Anker (4) mit Abstandshaltern (7) zur Sicherung von vorbestimmten Positionen relativ zueinander versehen sind.

4. Schutzfolien- und Ankersystem nach Anspruch 3, dadurch gekennzeichnet, daß die Schutzfolie (2) regelmäßig verteilte Mittel (6) zum Verbinden mit den Ankern (4) aufweist, die in entsprechenden Relativpositionen angeordnet sind.

5. Schutzfolien- und Ankersystem nach Anspruch 4, dadurch gekennzeichnet, daß die Verbindungsmittel (6) der Folie (2) von Öffnungen gebildet sind.

6. Schutzfolien- und Ankersystem nach Anspruch 4, dadurch gekennzeichnet, daß die Verbindungsmittel (27) der Folie (2) durch rückwärtig offene Vertiefungen (Aufnahmen), mit rückwärtigen oder vorderseitigen Verstärkungen versehen, gebildet sind.

7. Schutzfolien- und Ankersystem nach einem der Ansprüche 4 bis 6, dadurch gekennzeichnet, daß die Verbindungsmittel (27) der Folie (2) mit Verstärkungseinlagen (28) versehen sind.

8. Schutzfolien- und Ankersystem nach Anspruch 7, dadurch gekennzeichnet, daß die Verstärkungseinlagen (28) teilweise derart freiliegen, daß sie von dem Material der Ankerköpfe (5) im heißplastischen Zustand unter Druck zumindest teilweise eingebettet werden können.

9. Schutzfolien- und Ankersystem nach einem der Ansprüche 3 bis 8, dadurch gekennzeichnet, daß die Abstandshalter (7) ein die Anker (4) enthaltendes Flächengebilde sind.

10. Schutzfolien- und Ankersystem nach einem der Ansprüche 3 bis 9, dadurch gekennzeichnet, daß das Flächengebilde von einer Schalung (11) oder einem der Schalung zugehörigen Teil (16) gebildet ist.

11. Schutzfolien- und Ankersystem nach Anspruch 10, dadurch gekennzeichnet, daß die Schalung (11) Aufnahmen (15) für die Positionierung der Anker (4) aufweist.

12. Schutzfolien- und Ankersystem nach Anspruch 9, dadurch gekennzeichnet, daß das Flächengebilde (7) fest mit den Ankern (4) verbunden ist.

13. Schutzfolien- und Ankersystem nach Anspruch 12, dadurch gekennzeichnet, daß das Flächengebilde (7) durchbrochen, insbesondere gitter- oder netzartig ausgebildet ist.

14. Schutzfolien- und Ankersystem nach Anspruch 12 oder 13, dadurch gekennzeichnet, daß das Flächengebilde (7) in derjenigen Fläche liegt, die etwa der vorgesehenen, der Folie (2) zugewandten Oberfläche der Mörtelschicht (3) entspricht.

15. Schutzfolien- und Ankersystem nach Anspruch 14 oder 20, dadurch gekennzeichnet, daß die Ankerköpfe (5) über das Flächengebilde (7) hinaus zur Folienseite hin vorragen.

16. Schutzfolien- und Ankersystem nach Anspruch 12 oder 13, dadurch gekennzeichnet, daß das Flächengebilde (7) als Bewehrung (20) ausgebildet und hinter der Fläche, die der vorgesehenen Oberfläche der Mörtelschicht (3) entspricht, mit den Ankern (4) verbunden ist.

17. Schutzfolien- und Ankersystem nach einem der Ansprüche 3 bis 16, dadurch gekennzeichnet, daß an den Ankern (4) und/oder dem Flächengebilde (7) eine die folienseitige Oberfläche der Mörtelschicht (3) bestimmende, die Ankerköpfe (5) aufnehmende Hilfsschalungsplatte (12, 16, 22) vorgesehen ist.

18. Schutzfolien- und Ankersystem nach Anspruch 13, dadurch gekennzeichnet, daß die der Schutzfolie (2) zugewandte Seite des Flächengebildes (7) mit Einrichtungen (9) zur Bildung von Fließquerschnitten versehen ist.

19. Schutzfolien- und Ankersystem nach einem der Ansprüche 3 bis 18, dadurch gekennzeichnet, daß die Öffnungen (6) in der Schutzfolie in der vorbestimmten Umfangsrichtung einer Kanalauskleidung länglich sind.

20. Gruppe von Ankern zur Befestigung einer Auskleidungsfolie (2) an einer Mörtelschicht (3) mittels des Verfahrens nach Anspruch 1, dadurch gekennzeichnet, daß die Anker (4) miteinander durch die Abstandshalter in Form eines durchbrochenen, insbesondere gitter- oder netzartigen Flächengebildes (7) verbunden sind.

21. Wandanordnung mit einer von einer Schutzfolie (2) gebildeten Wandbekleidung, die an einer Vielzahl von in einer Mörtelschicht (3) gehaltenen Ankern (4) befestigt ist, dadurch gekennzeichnet, daß die Anker (4) miteinander durch ein in oder vor der Mörtelschicht (3) gelegenes, durchbrochenes Flächengebilde (7) verbunden sind.

22. Wandanordnung nach Anspruch 21, dadurch gekennzeichnet, daß zwischen der Schutzfolie und der Mörtelschicht ein durchgehender Fließraum (8) vorhanden ist.

23. Wandanordnung nach Anspruch 22, dadurch gekennzeichnet, daß der Fließraum (8) durch Vorsprünge (9) des Flächengebildes und/oder der Mörtelschicht und/oder durch eine poröse oder faserige Zwischenlage gesichert ist.

## Claims

1. A method of applying a protective sheet to a wall, wherein a mortar layer is formed and is allowed to harden with anchors embedded therein, wherein the anchors are retained in predetermined positions relative to one another during the embedding of spacers and subsequently the protective sheet is connected with the anchors.

2. A method according to Claim 1, characterised in that the predetermined relative positions of the anchors match the relative positions of connecting means provided in the protective sheet.

3. A protective sheet and anchoring system for lining a wall using the method according to Claim 1, characterised in that the anchors (4) are provided with spacers (7) for ensuring predetermined positions relative to one another.

4. A protective sheet and anchoring system according to Claim 3, characterised in that the protective sheet (2) has regularly spaced means (6) for connection with the anchors (4), which are disposed in corresponding relative positions.

5. A protective sheet and anchoring system according to Claim 4, characterised in that the connecting means (6) of the sheet (2) are formed by openings.

6. A protective sheet and anchoring system according to Claim 4, characterised in that the connecting means (27) of the sheet (2) are formed by rearwardly open recesses (sockets), with reinforcements at the rear or at the front.

7. A protective sheet and anchoring system according to any one of Claims 4 to 6, characterised in that the connecting means (27) of the sheet (2) are provided with reinforcing inserts (28).

8. A protective sheet and anchoring system according to Claim 7, characterised in that the reinforcing inserts (28) are partly exposed so that they can be at least partly embedded by the material of the anchor heads (5) in the hot plastic state under pressure.

9. A protective sheet and anchoring system according to any one of Claims 3 to 8, characterised in that the spacers (7) are a flat structure containing the anchors (4).

10. A protective sheet and anchoring system according to any one of Claims 3 to 9, characterised in that the flat structure is formed by a formwork (11) or a part (16) associated with the formwork.

11. A protective sheet and anchoring system according to Claim 10, characterised in that the formwork (11) has sockets (15) for the positioning of the anchors (4).

12. A protective sheet and anchoring system according to Claim 9, characterised in that the flat structure is securely connected with the anchors (4).

13. A protective sheet and anchoring system according to Claim 12, characterised in that the flat structure (7) is perforated, in particular in the manner of a lattice or netting.

14. A protective sheet and anchoring system according to Claim 12 or 13, characterised in that the flat structure (7) lies in that surface which corresponds approximately to the intended surface of the mortar layer (3) facing the sheet (2).

15. A protective sheet and anchoring system according to Claim 14 or 20 [sic], characterised in that the anchor heads (5) project beyond the flat structure (7) towards the sheet side.

16. A protective sheet and anchoring system according to Claim 12 or 13, characterised in that the flat structure (7) is in the form of a reinforcement (20) and is connected with the anchors (4) behind the surface which corresponds to the intended surface of the mortar layer (3).

17. A protective sheet and anchoring system according to any one of Claims 3 to 16, characterised in that an auxiliary formwork panel (12, 16, 22), which defines the surface of the mortar layer (3) on the sheet side and which accommodates the anchor heads (5), is provided on the anchors (4) and/or on the flat structure (7).

18. A protective sheet and anchoring system according to Claim 13, characterised in that the side of the flat structure (7) facing the protective sheet (2) is provided with means (9) for the formation of flow cross-sections.

19. A protective sheet and anchoring system according to any one of Claims 3 to 18, characterised in that the openings (6) in the protective sheet are elongate in the predetermined peripheral direction of a channel lining.

20. A group of anchors for securing a lining sheet (2) to a mortar layer (3) using the method according to Claim 1, characterised in that the anchors (4) are connected with one another by the spacers in the form of a perforated, in particular lattice-like or net-like flat structure (7).

21. A wall assembly with a wall lining which is formed by a protective sheet (2) and which is secured to a plurality of anchors (4) retained in a mortar layer (3), characterised in that the anchors (4) are connected with one another by a perforated flat structure (7) situated in or in front of the mortar layer (3).

22. A wall assembly according to Claim 21, characterised in that a continuos flow space (8) is provided between the protective sheet and the mortar layer.

23. A wall assembly according to Claim 22, characterised in that the flow space (8) is ensured by projections (9) of the flat structure and/or of the mortar layer and/or by a porous or fibrous intermediate layer.

## Revendications

1. Procédé pour appliquer une feuille de protection sur un mur, dans lequel une couche de mortier est formée et est laissée durcir avec des ancrages qui y sont incorporés, les ancrages étant maintenus dans des positions prédéterminées les uns par rapport aux autres, pendant l'incorporation, par des éléments d'écartement, et la feuille de protection est ensuite reliée aux ancrages.

2. Procédé selon la revendication 1, caractérisé en ce que les positions relatives prédéterminées des ancrages sont identiques aux positions relatives de moyens de liaison prévus dans la feuille de protection.

3. Système de feuille de protection et d'ancrages pour revêtir un mur au moyen du procédé selon la revendication 1, caractérisé en ce que les ancrages (4) sont munis d'éléments d'écartement (7) pour assurer des positions prédéterminées les uns par rapport aux autres.

4. Système de feuille de protection et d'ancrages selon la revendication 3, caractérisé en ce que la feuille de protection (2) présente des moyens (6) répartis régulièrement pour se relier aux ancrages (4), qui sont disposés dans des positions relatives correspondantes.

5. Système de feuille de protection et d'ancrages selon la revendication 4, caractérisé en ce que les moyens de liaison (6) de la feuille (2) sont formés d'ouvertures.

6. Système de feuille de protection et d'ancrages selon la revendication 4, caractérisé en ce que les moyens de liaison (27) de la feuille (2) sont formés de renfoncements (logements) ouverts vers l'arrière, munis de renforts arrière ou avant.

7. Système de feuille de protection et d'ancrages selon l'une des revendications 4 à 6, caractérisé en ce que les moyens de liaison (27) de la feuille (2) sont munis d'inserts de renfort (28).

8. Système de feuille de protection et d'ancrages selon la revendication 7, caractérisé en ce que les inserts de renfort (28) sont partiellement libres, de telle manière qu'ils peuvent être incorporés au moins partiellement par le matériau des têtes d'ancrage (5) à l'état plastique à chaud sous pression.

9. Système de feuille de protection et d'ancrages selon l'une des revendications 3 à 8, caractérisé en ce que les éléments d'écartement (7) sont une structure plane contenant les ancrages (4).

10. Système de feuille de protection et d'ancrages selon l'une des revendications 3 à 9, caractérisé en ce que la structure plane est formée d'un coffrage (11) ou d'une partie (16) associée au coffrage.

11. Système de feuille de protection et d'ancrages selon la revendication 10, caractérisé en ce que le coffrage (11) présente des logements (15) pour le positionnement des ancrages (4).

12. Système de feuille de protection et d'ancrages selon la revendication 9, caractérisé en ce que la structure plane (7) est reliée fixement aux ancrages (4).

13. Système de feuille de protection et d'ancrages selon la revendication 12, caractérisé en ce que la structure plane (7) est ajourée, conformée en particulier à la manière d'une grille ou d'un réseau.

14. Système de feuille de protection et d'ancrages selon la revendication 12 ou 13, caractérisé en ce que la structure plane (7) se situe dans la surface qui correspond approximativement à la surface prévue de la couche de mortier (3) tournée vers la feuille (2).

15. Système de feuille de protection et d'ancrages selon la revendication 14 ou 20, caractérisé en ce que les têtes d'ancrage (5) dépassent de la structure plane (7) en direction de la face de la feuille.

16. Système de feuille de protection et d'ancrages selon la revendication 12 ou 13, caractérisé en ce que la structure plane (7) est conformée en armature (20) et est reliée aux ancrages (4) derrière la surface qui correspond à la surface prévue de la couche de mortier (3).

17. Système de feuille de protection et d'ancrages selon l'une des revendications 3 à 16, caractérisé en ce que, sur les ancrages (4) et/ou la structure plane (7), il est prévu une plaque de coffrage auxiliaire (12, 16, 22) recevant les têtes d'ancrage (5) et déterminant la surface de la couche de mortier (3) du côté de la feuille.

18. Système de feuille de protection et d'ancrages selon la revendication 13, caractérisé en ce que la face de la structure plane (7) tournée vers la feuille de protection (2) est munie de dispositifs (9) pour former des sections transversales d'écoulement.

19. Système de feuille de protection et d'ancrages selon l'une des revendications 3 à 18, caractérisé en ce que les ouvertures (6) dans la feuille de protection sont allongées dans la direction périphérique prédéterminée d'une garniture de canal.

20. Groupe d'ancrages pour la fixation d'une feuille de garniture (2) sur une couche de mortier (3) au moyen du procédé selon la revendication 1, caractérisé en ce que les ancrages (4) sont reliés entre eux par les éléments d'écartement sous la forme d'une structure plane (7) ajourée, de type grille ou réseau.

21. Ensemble mural avec un habillage mural formé d'une feuille de protection (2), qui est fixé à une pluralité d'ancrages (4) maintenus dans une couche de mortier (3), caractérisé en ce que les ancrages (4) sont reliés entre eux par une structure plane (7) ajourée placée dans ou devant la couche de mortier (3).

22. Ensemble mural selon la revendication 21, caractérisé en ce qu'entre la feuille de protection et la couche de mortier, un espace d'écoulement continu (8) est présent.

23. Ensemble mural selon la revendication 22, caractérisé en ce que l'espace d'écoulement (8) est assuré par des saillies (9) de la structure plane et/ou de la couche de mortier et/ou par une couche intermédiaire poreuse ou fibreuse.
